# EUROPÄISCHE PATENTANMELDUNG

(11) **EP 4 729 356 A1**
(43) Veröffentlichungstag der Anmeldung: **22.04.2026**
(21) Anmeldenummer: 25204036.5
(22) Anmeldetag: 23.09.2025
(51) Int. Cl.: B60N 2/38, B60N 2/868

(54) **FAHRZEUGSITZ**

(30) Priorität: 15.10.2024 DE 102024129911
(71) Anmelder: GRAMMER AG, 92289 Ursensollen (DE)
(72) Erfinder: Dr. Krivenkov, Konstantin, 92224 Amberg (DE); Zöllner, Michael, 92355 Velburg (DE); Phanendry, Jatsy, 63741 Aschaffenburg (DE); Lorey, Konstatin, 92546 Schmidgaden (DE)
(74) Vertreter: Hannke Bittner & Partner mbB Regensburg

(57) **Zusammenfassung**

Die Erfindung betrifft Fahrzeugsitz, insbesondere für ein Nutzkraftfahrzeug, umfassend ein Sitzteil und eine Rückenlehne, welche ein Rückenlehnenunterteil und ein Rückenlehnenoberteil umfasst, wobei das Rückenlehnenoberteil relativ zu dem Rückenlehnenunterteil verlagerbar ist, wobei an dem Rückenlehnenunterteil eine Gleiteinrichtung feststehend angeordnet ist, wobei das Rückenlehnenoberteil die Gleiteinrichtung zumindest teilweise umschließt und an dieser entlang einer seitlichen Verlagerungsrichtung verlagerbar angeordnet ist, wobei das Rückenlehnenoberteil zwei fest miteinander verbundene Schalenelemente umfasst, zwischen welchen die Gleiteinrichtung angeordnet ist, wobei zumindest zwei innere Laufbahnen an jeweils einem Schalenelement angeordnet oder durch das jeweilige Schalenelement ausgebildet sind, wobei die Gleiteinrichtung die inneren Laufbahnen kontaktiert und entlang diesen gleiten kann.

## Beschreibung

Die Erfindung betrifft einen Fahrzeugsitz, insbesondere für ein Nutzkraftfahrzeug, umfassend ein Sitzteil und eine Rückenlehne, welche ein Rückenlehnenunterteil und ein Rückenlehnenoberteil umfasst, wobei das Rückenlehnenoberteil relativ zu dem Rückenlehnenunterteil verlagerbar ist.

Derartige Fahrzeugsitze sind für Nutzkraftfahrzeige, landwirtschaftliche Nutzkraftfahrzeuge beispielsweise Traktoren, Baumaschinen, Flurförderzeuge, Gabelstapler oder ähnliche Fahrzeuge geeignet. Fahrzeugführer solcher Nutzkraftfahrzeuge nehmen oftmals eine, von der normalen Sitzhaltung, welche nach vorne, also in Fahrrichtung, gerichtet ist, abweichende weitere Sitzhaltung ein. Diese weitere Sitzhaltung ist seitlich und/ oder rückwärtig ausgerichtet und dient beispielsweise dazu, Bedienorgane, welche seitlich und/oder hinten in der Fahrzeugkabine angeordnet sind, besser erreichen und bedienen zu können. Ferner kann die weitere Sitzhaltung dazu dienen, ein hinter dem landwirtschaftlichen Nutzkraftfahrzeug angehängtes Arbeitsgerät für einen längeren Zeitraum besser beobachten zu können. Selbstverständlich wird die weitere Sitzhaltung auch bei der Rückwärtsfahrt eingenommen. Um die Einnahme einer solchen weiteren Sitzhaltung zu ermöglichen, beziehungsweise zu erleichtern, sind aus dem Stand der Technik Fahrzeugsitze bekannt, bei welchen das gesamte Rückenlehnenoberteil seitlich verlagerbar ausgestaltet ist. Der Insasse kann somit bei der Drehbewegung das Rückenlehnenoberteil wegschieben und hat dadurch mehr Raum zur Verfügung und erfährt gegebenenfalls eine Abstützung des Rückens in der weiteren Sitzhaltung. Nachteilig aus dem Stand der Technik ist jedoch, dass für die Verlagerungsfunktion entsprechende Führungseinrichtungen notwendig sind, durch welche die Rückenlehnenoberteile vergleichsweise groß dimensioniert werden müssen. Durch die das Vorsehen der Führungseinrichtungen sind weiterhin die Designmöglichkeiten eingeschränkt. Ferner sind die Führungseinrichtungen vergleichsweise kostspielig.

Aufgabe der Erfindung ist es einen Fahrzeugsitz bereitzustellen, bei welchem die genannten Nachteile überwunden oder zumindest reduziert sind.

Die Aufgabe wird durch den Gegenstand des unabhängigen Anspruchs1 gelöst. Vorteilhafte Ausgestaltungen sind den Unteransprüchen zu entnehmen.

Kerngedanke der Erfindung ist ein Fahrzeugsitz, insbesondere für ein Nutzkraftfahrzeug, umfassend ein Sitzteil und eine Rückenlehne, welche ein Rückenlehnenunterteil und ein Rückenlehnenoberteil umfasst, wobei das Rückenlehnenoberteil relativ zu dem Rückenlehnenunterteil verlagerbar ist, wobei an dem Rückenlehnenunterteil eine Gleiteinrichtung feststehend angeordnet ist, wobei das Rückenlehnenoberteil die Gleiteinrichtung zumindest teilweise umschließt und an dieser entlang einer seitlichen Verlagerungsrichtung (V) verlagerbar angeordnet ist, wobei das Rückenlehnenoberteil zwei fest miteinander verbundene Schalenelemente umfasst, zwischen welchen die Gleiteinrichtung angeordnet ist, wobei zumindest zwei innere Laufbahnen an jeweils einem Schalenelement angeordnet oder durch das jeweilige Schalenelement ausgebildet sind, wobei die Gleiteinrichtung die inneren Laufbahnen kontaktiert und entlang diesen gleiten kann.

Das Rückenlehnenunterteil und das Rückenlehnenoberteil sind dafür vorgesehen und geeignet, einen Insassen abzustützen. Vorteilhafterweise bilden das Rückenlehnenunterteil und das Rückenlehnenoberteil zusammen die Rückenlehne aus.

Der Fahrzeugsitz erstreckt sich entlang einer Breitenachse (Y), einer Längsachse (X) und einer Höhenachse (Z). **In** der erwähnten normalen Sitzhaltung ist der Insasse entlang der Längsachse (X) nach vorne gerichtet. Die Rückenlehne ist an oder hinter einen entlang der Längsachse (X) hinteren Ende des Sitzteils angeordnet und erstreckt sich ausgehend vom Sitzteil entlang der Höhenachse Z nach oben. Dabei ist vorteilhafterweise das Rückenlehnenoberteil entlang einer Höhenachse (Z) über dem Rückenlehnenunterteil angeordnet.

Das erfindungsgemäße Rückenlehnenoberteil weist im Vergleich zum Stand der Technik eine vereinfachte Struktur auf, wodurch eine vereinfachte Montage des Rückenlehnenoberteils ermöglicht ist. Das erfindungsgemäße Rückenlehnenoberteil kann weiterhin vergleichsweise schmal gebaut werden. Durch die Verwendung der Schalenelemente werden auch größere Designmöglichkeiten für den die Rückenlehne ermöglicht, da ich die äußeren Oberflächen der Schalenelement beliebig ausgebildet sein können. Gegebenenfalls bieten die Schalenelement die Möglichkeit, weitere Elemente daran anzuordnen.

Das erfindungsgemäße Rückenlehnenoberteil ermöglicht die seitliche Verlagerungsfunktion auch in einfacheren/cost effective Rückenlehnen vorzusehen. Zum anderen kann das erfindungsgemäße Rückenlehnenoberteil auch in kleineren Fahrzeugkabinen platziert werden, wodurch einen Beitrag zur Gesunderhaltung möglichst aller Fahrer erfolgt.

Durch die Anordnung der Gleiteinrichtung zwischen den Schalenelementen ergibt sich vorteilhafterweise eine sandwichartige Struktur bestehend aus einem Abschnitt des Rückenlehnenoberteil und der Gleiteinrichtung. Vorzugsweise ist die Gleiteinrichtung blattartig ausgebildet. Die Gleiteinrichtung weist demnach eine wesentlich größere Erstreckung entlang der Höhenachse (Z) und entlang der Breitenachse (Y) als entlang einer Längsachse (X) auf. Vorteilhafterweise sind die beiden Schalenelemente derart zueinander angeordnet, dass ein Zwischenraum zwischen diesen geschaffen ist. In diesem Zwischenraum bewegt sich die Gleiteinrichtung relativ zu den Schalenelementen. Die Gleiteinrichtung hat somit zwischen dem vorderen und dem hinteren Schalenelement lediglich einen geringen Platzbedarf. Das Rückenlehnenoberteil kann somit äußerst schmal gebaut werden.

Vorteilhafterweise liegt die seitliche Verlagerungsrichtung (V) in einer Ebene, welche durch eine Breitenachse (Y) und eine Längsachse (X) aufgespannt wird. Vorzugsweise ist die seitliche Verlagerungsrichtung (V) im Wesentlichen entlang der Breitenachse (Y). Die seitliche Verlagerungsrichtung (V) kann geradlinig entlang der Breitenachse (Y) sich erstrecken. Die seitliche Verlagerungsrichtung (V) kann jedoch auch eine gekrümmte Richtung in der Ebene sein. Bei einer solchen gekrümmten Richtung erfolgt eine Verlagerung entlang der Breitenachse Y aber auch entlang der Längsachse (X). Bei einer solchen gekrümmten Richtung handelt es sich vorzugsweise generell eine Drehbewegung um die Höhenachse (Z). Allerdings ist der Radius der Verlagerungskurve beziehungsweise der gekrümmten Richtung derart groß, dass die Komponente entlang der Längsachse (X) im Vergleich zu der Komponente entlang der Breitenachse (Y) klein ist. Eine seitliche Verlagerungsrichtung (V) im Wesentlichen entlang der Breitenachse (Y) soll somit eine Verlagerung kann geradlinig entlang der Breitenachse (Y) als auch die beschriebene Verlagerung entlang einer gekrümmten Richtung, welche eine sehr viel größere Komponente entlang Breitachse (Y) als entlang der Längsachse (X) aufweist, umfassen.

Nach einer vorteilhaften Ausführungsform ist jedes der Schalenelemente einteilig ausgebildet. Unter einer einteiligen Ausgestaltung ist hierbei zu verstehen, dass sämtliche Abschnitte des Schalenelements aus einem einzigen und einheitlichen Teil gefertigt werden. Denkbar wäre jedoch auch, dass jedes der Schalenelemente aus mehreren Bauteilen gefertigt ist. Die jeweiligen Bauteile sind dabei mittels geeigneten vorteilhaften Verbindungen verbunden. Diese Verbindungen können dabei stoffschlüssige und/oder formschlüssige Verbindungen sein. Denkbar wäre auch, dass jedes der Schalenelemente einstückig aus mehreren Bauteilen ausgebildet ist. Unter einer einstückigen Ausgestaltung ist hierbei zu verstehen, dass sämtliche Abschnitte des Schalenelements zwar nicht aus einem einzigen und einheitlichen Teil gefertigt werden, jedoch nicht nur fest, sondern so innig miteinander verbunden sind, dass sie nicht als mehrere aneinander gefügte Bauteile erscheinen und jedenfalls nicht mehr voneinander gelöst werden können, ohne dass diese dabei zerstört werden.

Die Laufbahnen können dabei durch das jeweilige Schalenelement, an dessen innerer Oberfläche ausgebildet sein, beziehungsweise in dessen innerer Oberfläche integriert sein. Alternativ oder kumulativ können die Laufbahnen als separates Element an der inneren Oberfläche des jeweiligen Schalenelements angeordnet sein. Dies kann durch gängige Verbindungsarten erfolgen.

Nach einer vorteilhaften Ausführungsform sind die Schalenelemente und/oder die Gleiteinrichtung aus einem Kunststoff hergestellt. Vorteilhafterweise bestehen die Schalenelemente und/oder die Gleiteinrichtung aus einem glasfaserverstärkten Kunststoff. Derartige Kunststoffe weisen eine besonders hohe Stabilität auf. Weiterhin können Bauteile aus derartigen Kunststoffen einfach und kostengünstig hergestellt werden.

Nach einer weiteren vorteilhaften Ausführungsform erstrecken sich die beiden Schalenelemente im Wesentlichen über die gesamte Höhe entlang der Höhenachse (Z) und die gesamte Breite entlang der Breitenachse (Z) des Rückenlehnenoberteils. Denkbar wären jedoch auch Ausführungsformen, bei welchen an den Schalenelementen weitere Elemente befestigt sind. Hierdurch wäre die genannte Höhe und Breite des Rückenlehnenoberteils nicht durch die Schalenelemente allein bestimmt.

Nach einer weiteren vorteilhaften Ausführungsform sind ein vorderes Schalenelement und ein hinteres Schalenelement vorgesehen. Das vordere Schalenelement ist somit vorzugsweise entlang der Längsachse (X) näher zu dem Insassen hin angeordnet als das hintere Schalenelement. Bevorzugt umfasst das vordere Schalenelement einen oberen Abschnitt, welcher sich entlang der Längsachse (X) nach hinten über die Gleiteinrichtung erstreckt. Vorteilhafterweise umfasst das vordere Schalenelement weiterhin einen Abstützabschnitt, welcher dazu bestimmt und geeignet ist den Insassen abzustützen. Der Abstützabschnitt schließt an den oberen Bereich an und schließt mit diesem einen Winkel β ein. Der Winkel β liegt vorzugsweise in einem Bereich zwischen 75° und 115° weiter bevorzugt zwischen 85 und 110°. Vorteilhafterweise weist das vordere Schalenelement somit einen im Wesentlichen L-förmigen Querschnitt auf.

Nach einer weiteren vorteilhaften Ausführungsform sind auf dem oberen Abschnitt Verstärkungselemente angeordnet sind. Vorzugsweise sind die Verstärkungselemente als Rippenelemente ausgebildet. Bevorzugt sind die Rippenelemente in zwei Bereichen angeordnet. Die zwei Bereiche sind durch eine Mittelachse, welche mittig durch den oberen Abschnitt des vorderen Schalenelements verläuft, getrennt. Innerhalb dieser Bereiche sind die jeweiligen Rippenelemente im Wesentlichen parallel zueinander angeordnet. Die Rippenelemente in einem ersten Bereich schließen mit einer Achse, welche parallel zu der Mittelachse verläuft, einen Winkel α ein. Vorteilhafterweise liegt der Winkel α in einem Bereich zwischen 10° und 60°, bevorzugt in einem Bereich zwischen 20° und 45°. In einem zweiten Bereich schließen vorzugsweise die jeweiligen Rippenelemente mit einer Achse, welche parallel zu der Mittelachse verläuft, einen Winkel -α ein. Die Rippenelemente des zweiten Bereichs schließen somit vorteilhafterweise einen Winkel ein, welcher in einem Bereich zwischen -10° und -60°, bevorzugt in einem Bereich zwischen -20° und -45° liegt. Die Rippenelemente des ersten Bereichs und des zweiten Bereichs, welche am nächsten zu der Mittelachse liegen, sind somit bevorzugt V-förmig angeordnet.

Nach einer weiteren vorteilhaften Ausführungsform ist zumindest ein Polsterelement zumindest abschnittsweise auf dem vorderen Schalenelement angeordnet. Vorteilhafterweise ist das ist zumindest eine Polsterelement auf dem Abstützabschnitt angeordnet. Das zumindest eine Polsterelement kann sich auch weiterhin über den oberen Abschnitt erstrecken. Das zumindest eine Polsterelement kann vorteilhafterweise zumindest eine Polsterlage umfassen, welche beispielsweise aus einem Schaumstoff besteht. Weiterhin kann das Polsterelement einen Bezug umfassen. Selbstverständlich können auch noch weitere Lagen vorgesehen sein.

Vorteilhafterweise ist an dem hinteren Schalenelement zumindest ein Blendenelement angeordnet. Denkbar wäre, dass zwischen dem hinteren Schalenelement und dem Blendenelement weitere Elemente vorgesehen sind. Auf dem Blendenelement kann vorteilhafterweise eine Beschriftung und/oder ein Logo angeordnet sein. Vorzugsweise weist das Blendenelement eine C-artigen Querschnitt auf. Bevorzugt erstreckt sich der obere Abschnitt des vorderen Schalenelement bündig über einen oberen Abschnitt des Blendenelement. Vorteilhafterweise schließen obere Abschnitt des vorderen Schalenelement und der obere Abschnitt des Blendenelements bündig ab. Denkbar wäre, dass der obere Abschnitt des Blendenelements an dem oberen Abschnitt des vorderen Schalenelements befestigt ist.

Nach einer weiteren vorteilhaften Ausführungsform ist die Gleiteinrichtung in einem seitlichen Bereich des Rückenlehnenunterteils angeordnet. Demnach ist die Gleiteinrichtung vorzugsweise außermittig an dem Rückenlehnenunterteil angeordnet. Die Gleiteinrichtung ist vorteilhafterweise an oder nahe an einer seitlichen Begrenzung des Rückenlehnenunterteils angeordnet. Durch diese Anordnung der Gleiteinrichtung in einem seitlichen Bereich des Rückenlehnenunterteils kann das Rückenlehnenoberteil eine Grundstellung einnehmen, in welcher dieses mittig über den Rückenlehnenunterteil angeordnet ist. Vorteilhafterweise kann in dieser Grundstellung die Gleiteinrichtung an zumindest einem der Schalenelemente anliegen. Vorteilhafterweise kann in einer zweiten Stellung des Rückenlehnenoberteils, in welcher das Rückenlehnenoberteil um einen maximalen Verlagerungsweg verlagert ist, die Gleiteinrichtung an zumindest einem der Schalenelemente anliegen. Vorteilhafterweise ist die Länge des Verlagerungswegs des Rückenlehnenoberteils beschränkt durch die Breite des Rückenlehnenoberteils entlang der Breitenachse (Y), dies bedingt sich dadurch, dass die Laufbahnen innerhalb der Schalenelemente angeordnet sind oder durch diese ausgebildet sind.

Vorteilhafterweise ist die Gleiteinrichtung fest an dem Rückenlehnenunterteil auf der linken Seite, bei einer Blickrichtung des Insassen nach vorne, angeordnet. Das Rückenlehnenoberteil kann somit durch eine Drehung des Insassen nach rechts hinten nach links verlagert werden. Es wurde festgestellt, dass Insassen/Fahrzeugführer zumeist eine Drehung zur rechten Seite beziehungsweise nach rechts hinten durchführen. Selbstverständlich soll die Erfindung auch eine Ausführungsform umfassen, bei welcher die Gleiteinrichtung fest an dem Rückenlehnenunterteil auf der rechten Seite angeordnet ist. Weiterhin wäre denkbar, dass die Gleiteinrichtung mittig auf dem Rückenlehnenunterteil angeordnet ist. Hierdurch würde ein Verlagerungsweg sowohl nach links als auch nach rechts ermöglicht sein. Da die Schalenelemente vorteilhafterweise symmetrisch ausgebildet sind, ist eine Verwendung sowohl für eine Drehung nach rechts als auch für eine Drehung nach links vorsehbar. Vorzugsweise bestimmt lediglich der Montageort der Gleiteinrichtung an dem Rückenlehnenunterteil, welche Drehrichtung des Insassen unterstützt wird.

Nach einer weiteren vorteilhaften Ausführungsform weisen die Laufbahnen eine Krümmung auf, so dass das Rückenlehnenoberteil entlang einer gekrümmten Verlagerungskurve verlagerbar ist. Vorteilhafterweise ist die Verlagerungskurve kreisbogenförmig um die Höhenachse (Z). Die gekrümmte Verlagerungskurve folgt vorzugsweise der oben beschriebenen einer gekrümmten Richtung, welche in einer Eben liegt, die durch die Breitenachse (Y) und die Längsachse (X) aufgespannt wird. Dabei ist vorteilhafterweise eine Komponente der gekrümmten Verlagerungskurve entlang der Breitenachse (Y) größer als eine Komponente entlang der Längsachse (X). Durch eine derartige gekrümmte Verlagerungskurve wird bei der Drehbewegung dem Insassen weiterhin eine gewisse Abstützung durch das Rückenlehnenoberteil bereitgestellt. Vorteilhafterweise weisen die Schalenelemente eine Krümmung auf. Die Krümmung der Schalenelemente kann der Krümmung der Laufbahnen im Wesentlichen entsprechen oder sich von der Krümmung der Laufbahnen unterscheiden. Die Krümmung der Schalenelemente, insbesondere die Krümmung des vorderen Schalenelements ergonomischen Gesichtspunkten entsprechend ausgebildet.

Nach einer weiteren vorteilhaften Ausführungsform ist jeder der Laufbahnen zumindest ein Gleitelement der Gleiteinrichtung zugeordnet. Vorteilhafterweise sind jeder Laufbahn zwei Gleitelemente zugeordnet. Vorzugsweise sind diese beiden Gleitelemente entlang einer Breitenerstreckung der Gleiteinrichtung voneinander beabstandet. Die vorteilhaften Gleitelemente kontaktieren die zugeordneten Laufbahnen und können an den Laufbahnen entlang gleiten. Dabei ist die Gleiteinrichtung und deren Gleitelemente feststehend relativ zu dem Rückenlehnenunterteil.

Vorteilhafterweise stellen die Laufbahnen und die zugeordneten Gleitelemente eine angestellte Lagerung dar. Vorzugsweise stellen die Laufbahnen und die zugeordneten Gleitelemente eine O-Anordnung dar. Eine solche O Anordnung stellt eine maximal mögliche Kippsteifigkeit bereit. Die Gleiteinrichtung und die diese umschließenden Schalenelemente mit den Laufbahnen stellen prinzipiell eine Profilschienenführung dar. Mit einer vorteilhaften angestellten Lagerung ist die Anordnung der Gleiteinrichtung und der umschließenden Schalenelemente mit einer Profilschienenführung, umfassend eine doppelseitige Schwalbenschwanzprofilschiene vergleichbar. Vorzugsweise umfasst die Gleiteinrichtung zwei entlang der Höhenachse (Z) obere Gleitelemente. Diese sind auf gegenüberliegenden Seiten der Gleiteinrichtung angeordnet. Die oberen Gleitelemente umfassen vorteilhafterweise Kontaktflächen, welche entlang der Höhenachse Z schräg nach oben und nach außen verlaufen. Die Kontaktflächen der oberen Gleitelemente schließen somit mit einer Achse, welche parallel zu der Mittelsenkrechten der Gleiteinrichtung verläuft, einen Winkel γ ein. Der Winkel γ liegt in einem Bereich zwischen 30° und 50°. Die Kontaktflächen der oberen Gleitelemente bilden demnach vorteilhafterweise im Wesentlichen eine entlang der Höhenachse (Z) nach oben offene V-Form aus.

Vorzugsweise umfasst die Gleiteinrichtung zwei entlang der Höhenachse (Z) untere Gleitelemente. Diese sind auf gegenüberliegenden Seiten der Gleiteinrichtung angeordnet. Die unteren Gleitelemente umfassen vorteilhafterweise Kontaktflächen, welche entlang der Höhenachse Z schräg nach unten und nach außen verlaufen. Die Kontaktflächen der unteren Gleitelemente schließen somit mit einer Achse, welche parallel zu der Mittelsenkrechten der Gleiteinrichtung verläuft, einen Winkel γ ein. Der Winkel γ liegt in einem Bereich zwischen 30° und 50. Vorteilhafterweise ist ein erstes der unteren Gleitelemente entlang der Höhenachse (Z) versetzt zu dem zweiten der unteren Gleitelemente angeordnet.

Nach einer weiteren vorteilhaften Ausführungsform besteht zwischen dem zumindest einen Gleitelement und der Laufbahn ein im Wesentlichen linienförmiger Kontakt. Vorzugsweise weist das zumindest eine Gleitelement eine Kontaktfläche auf, welche eine zugeordnete Laufbahn kontaktiert. Bevorzugt ist die Kontaktfläche tonnenförmig ausgebildet. Eine solche tonnenförmige Ausgestaltung weist eine Wölbung auf, welche mittig ein Maximum aufweist. Eine solche tonnenförmig ausgebildete Kontaktfläche bringt die Vorteile einer minimalen Flächenpressung sowie einer maximalen Verformungsdifferenz.

Nach einer weiteren vorteilhaften Ausführungsform ist eine erste Teilmenge der inneren Laufbahnen durch Leistenelemente ausgebildet. Vorzugsweise sind die Leistenelemente an einem der Schalenelemente angeordnet. Vorteilhafterweise ist zwischen einem Leistenelement und einem Schalenelement zumindest ein elastisches Element angeordnet. Vorzugsweise ist das zumindest eine elastische Element dazu bestimmt ausgebildet, das jeweilige Leistenelement an die Gleiteinrichtung zu drücken. Vorteilhafterweise ist das zumindest eine elastische Element eine Wellen- oder Blattfeder, welche sich entlang der Laufbahn erstreckt. Denkbar wäre auch, dass das zumindest eine elastische Element ein elastisches Polymer oder andersartig ausgebildetes geeignetes elastische Element ist.

Nach einer weiteren vorteilhaften Ausführungsform bilden jeweils eine Laufbahn des vorderen Schalenelements und eine Laufbahn des hinteren Schalenelements ein Laufbahnpaar. Vorzugsweise ist jeweils eine Laufbahn eines solchen Laufbahnpaares der ersten Teilmenge zugehörig. Vorzugsweise ist die jeweilig zweite Laufbahn eines solchen Laufbahnpaares einer zweiten Teilmenge innerer Laufbahnen zugehörig. Die Laufbahnen, welche der zweiten Teilmenge zugehörig sind, sind vorteilhafterweise an einer Innenseite eines der Schalenelemente ausgebildet beziehungsweise in dieser Innenseite integriert oder durch ein externes Element ausgebildet, welches an einer Innenseite eines der Schalenelemente befestigt ist. Die Laufbahnen aus der zweiten Teilmenge weisen somit vorzugsweise kein elastisches Element auf. Ein vorteilhaftes Laufbahnpaar besteht somit aus einer Laufbahn, welches als ein Leistenelement ausgebildet ist, das an die Gleiteinrichtung gedrückt wird und aus einer Laufbahn, welche an einer Innenseite eines Schalenelements angeordnet ist oder durch diese ausgebildet ist. Die beiden Laufbahnen eines Laufbahnpaars können vorzugsweise auf der gleichen Höhe entlang der Höhenachse (Z) angeordnet sein. Denkbar wäre auch, dass beiden Laufbahnen eines Laufbahnpaars entlang der Höhenachse (Z) versetzt auf unterschiedlichen Höhen entlang der Höhenachse (Z) angeordnet sind.

Nach einer weiteren vorteilhaften Ausführungsform weisen die Schalenelemente unterschiedliche Steifigkeiten auf. Vorzugsweise sind die Steifigkeiten der Schalenelemente derart ausgebildet, dass die vorderen Laufbahnen oder die hinteren Laufbahnen (gegen die Gleiteinrichtung gedrückt werden.

Nach einer weiteren vorteilhaften Ausführungsform weisen die Schalenelemente zweite Verstärkungselemente auf, welche zumindest in Abschnitten der Schalenelemente vorgesehen sind, in welchen die Laufbahnen angeordnet oder ausgebildet sind. Durch die zweiten Verstärkungselemente weisen somit die Schalenelemente in den Bereichen, in welchen die Laufbahnen angeordnet oder ausgebildet sind eine verstärkte Stabilität auf. Die Schalenelemente weisen somit hinsichtlich durch die Laufbahnen einwirkender Kräfte, beispielsweise Scherkräfte und/oder Biegekräfte und/oder Torsionskräfte, eine erhöhte Stabilität auf. Vorzugsweise sind die zweiten Verstärkungselement als Rippenelemente ausgebildet.

Nach einer weiteren vorteilhaften Ausführungsform besteht in einer Grundstellung des Rückenlehnenoberteils und/oder einer zweiten Stellung des Rückenlehnenoberteils, in welcher das Rückenlehnenoberteil um einen maximalen Verlagerungsweg verlagert ist, zumindest eine lösbare mechanische Sicherungsverbindung. Die zumindest eine Sicherungsverbindung ist durch eine Verlagerung aus der Grundstellung oder der zweiten Stellung heraus wieder lösbar. Die Sicherungsverbindung ist vorzugsweise dazu bestimmt und geeignet Krafteinwirkungen entlang der Höhenachse (Z) aufzunehmen. In der Grundstellung oder der zweiten Stellung ist die Gleiteinrichtung an oder nahe einer äußeren Seite der Schalenelemente. Wirkt nun auf die gegenüberliegende äußere Seite eine Kraft entlang der Höhenachse (Z) kann durch die Hebelwirkung der Laufbahnen die Gleitverbindung zwischen den Laufbahnen und der Gleiteinrichtung beeinträchtigt werden. Durch die vorteilhafte Sicherungsverbindung werden derartige Krafteinwirkungen in die Schalenelemente eingeleitet, ohne dass die Gleitverbindung Schaden nimmt. Vorzugsweise umfasst die Sicherungsverbindung zumindest ein Vorsprungselement, welches zumindest in der Grundstellung oder zumindest in der zweiten Stellung in zumindest einen Aufnahmeelement angeordnet ist. Das zumindest eine Vorsprungselement kann vorzugsweise an der Gleiteinrichtung oder an zumindest einem der Schalenelemente angeordnet sein. Dementsprechend kann zumindest eine Aufnahmeelement vorzugsweise an zumindest einem der Schalenelemente oder an der Gleiteinrichtung angeordnet sein.

Nach einer weiteren vorteilhaften Ausführungsform befindet sich das Rückenlehnenoberteil in der Grundstellung und/oder in der zweiten Stellung Rückenlehnenoberteil in einer Rastposition. Das Rückenlehnenoberteil kann vorzugsweise aus der Rastposition durch einen erhöhten Kraftaufwand herausverlagert werden. In dieser Rastposition besteht zwischen der Gleiteinrichtung und zumindest einem der Schalenelemente ein Rastverbindung. Vorteilhafterweise umfassen die Gleiteinrichtung und zumindest eines der Schalenelemente korrespondierende Rastelemente. Vorzugsweise ist ein Rastmechanismus in der Sicherungsverbindung integriert. Denkbar wäre jedoch auch ein von der Sicherungsverbindung separater Rastmechanismus.

Nach einer weiteren bevorzugten Ausführungsform ist eine Rückstelleinrichtung vorgesehen sein, welche das zumindest eine Rückenlehnenoberteil automatisch in die Grundstellung zurückführt.

Nach einer weiteren bevorzugten Ausführungsform ist eine Arretierungsvorrichtung vorgesehen sein, welche das zumindest eine Rückenlehnenoberteil in der zweiten Stellung arretiert. Das Rückenlehnenoberteil kehrt nach einer Freigabe, beispielsweise eine Freigabebewegung in die Grundstellung zurück.

Die vorliegende Aufgabe wird weiterhin von einem Nutzkraftfahrzeug mit einem Fahrzeugsitz nach den vorhergehend beschriebenen Ausführungsformen gelöst. Das Nutzfahrzeug kann dabei mit allen bereits obig im Rahmen Fahrzeugsitzes beschriebenen Merkmalen einzeln oder in Kombination miteinander ausgestattet sein und umgekehrt.

Das Nutzkraftfahrzeug kann ein landwirtschaftliches Nutzkraftfahrzeug, eine Baumaschine, ein Gabelstapler, eine Material Handling-Maschine, ein Flurförderzeug, oder Ähnliches sein.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:

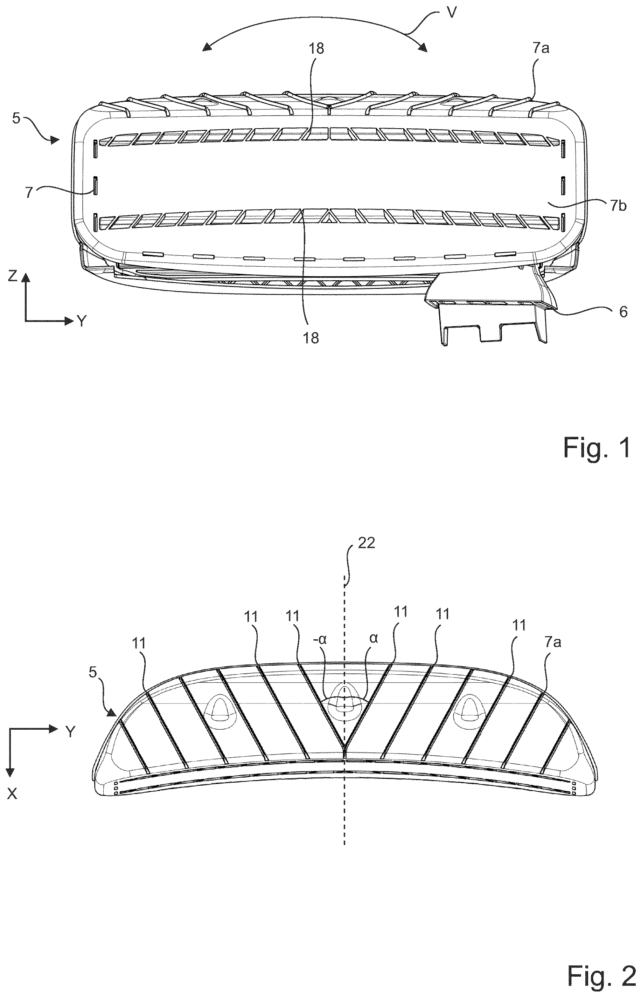

- Fig. 1: eine Vorderansicht eines Rückenlehnenoberteils nach einer Ausführungsform;
- Fig. 2: eine Draufsicht eines Rückenlehnenoberteils nach einer Ausführungsform;
- Fig. 3: eine Seitenansicht eines Rückenlehnenoberteils nach einer Ausführungsform;
- Fig. 4: eine Vorderansicht eines Rückenlehnenoberteils nach einer Ausführungsform;
- Fig. 5: eine Explosionsdarstellung eines Rückenlehnenoberteils nach einer Ausführungsform;
- Fig. 6: eine Explosionsdarstellung eines Rückenlehnenoberteils nach einer Ausführungsform;
- Fig. 7: eine Vorderansicht eines Rückenlehnenoberteils nach einer Ausführungsform;
- Fig. 8: eine Schnittansicht eines Rückenlehnenoberteils nach einer Ausführungsform;
- Fig. 9: eine Draufsicht eines Rückenlehnenoberteils nach einer Ausführungsform;
- Fig. 10: eine Schnittansicht eines Rückenlehnenoberteils nach einer Ausführungsform;
- Fig. 11: eine Schnittansicht eines Rückenlehnenoberteils nach einer Ausführungsform;
- Fig. 12: eine Schnittansicht eines Rückenlehnenoberteils nach einer Ausführungsform;
- Fig. 13: eine Vorderansicht eines Rückenlehnenoberteils nach einer Ausführungsform;
- Fig. 14: eine Schnittansicht eines Rückenlehnenoberteils nach einer Ausführungsform;
- Fig. 15: eine Explosionsdarstellung eines Rückenlehnenoberteils nach einer Ausführungsform;
- Fig. 16: eine Teilansicht eines Rückenlehnenoberteils nach einer Ausführungsform;
- Fig. 17: eine Teilansicht eines Rückenlehnenoberteils nach einer Ausführungsform;
- Fig. 18: eine Teilansicht eines Rückenlehnenoberteils nach einer Ausführungsform;
- Fig. 19: ein Fahrzeugsitz nach einer Ausführungsform;
- Fig. 20: eine Prinzipdarstellung;
- Fig. 21: eine Prinzipdarstellung;
- Fig. 22: eine Prinzipdarstellung.

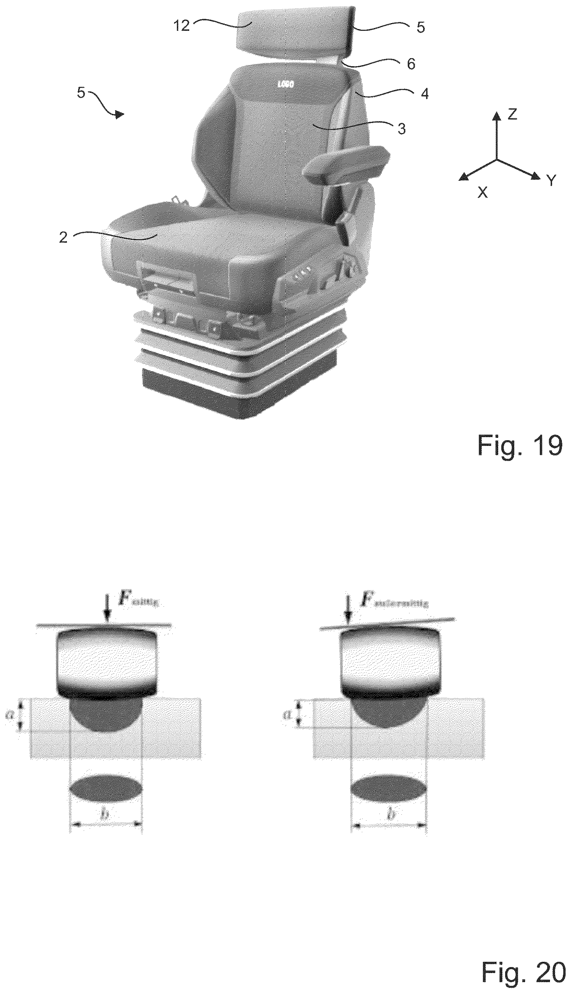

In Figur 19 ist ein Fahrzeugsitz 1, insbesondere für ein Nutzkraftfahrzeug, dargestellt. Der Fahrzeugsitz 1 umfasst ein Sitzteil 2 und eine Rückenlehne 3, welche ein Rückenlehnenunterteil 4 und ein Rückenlehnenoberteil 5 umfasst, wobei das Rückenlehnenoberteil 5 relativ zu dem Rückenlehnenunterteil 4 verlagerbar ist, wobei an dem Rückenlehnenunterteil 4 eine Gleiteinrichtung 6 feststehend angeordnet ist, wobei das Rückenlehnenoberteil 5 die Gleiteinrichtung 6 zumindest teilweise umschließt und an dieser entlang seitlichen Verlagerungsrichtung V verlagerbar angeordnet ist, wobei das Rückenlehnenoberteil 5 zwei fest miteinander verbundene Schalenelemente 7,8 umfasst, zwischen welchen die Gleiteinrichtung 6 angeordnet ist, wobei zumindest zwei innere Laufbahnen 9, 10 an jeweils einem Schalenelement 7, 8 angeordnet oder durch das jeweilige Schalenelement 7,8 ausgebildet sind, wobei die Gleiteinrichtung 6 die inneren Laufbahnen 9, 10 kontaktiert und entlang diesen gleiten kann.

Der Fahrzeugsitz 1 erstreckt sich entlang einer Höhenachse Z, einer Längsachse X und einer Breitenachse Y. Die jeweiligen Achsen sind dabei senkrecht zueinander. Dabei erstreckt sich die Längsachse X entlang der (Fahrt-)Richtung, in welcher der Insasse üblicherweise nach vorne, also zu den Bedienelementen, wie Lenkrad usw., ausgerichtet ist. Die Rückenlehne 3 ist in einem entlang der Längsachse X hinteren Bereich des Sitzteils 2 oder entlang der Längsachse X hinter dem Sitzteil 2 angeordnet. Weiterhin erstreckt sich die Rückenlehne 3 ausgehend vom dem Sitzteil 2 entlang der Höhenachse Z nach oben. Der Einfachheit halber wird davon ausgegangen, dass sich die Rückenlehne 3 entlang der Höhenachse Z erstreckt. Selbstverständlich kann die Rückenlehne 3 neigbar ausgebildet sein und somit geneigt zu der Höhenachse Z sein. Dementsprechend kann der Fahrzeugsitz 1 eine Verstelleinrichtung für die Neigung der Rückenlehne 3 umfassen. Der Fahrzeugsitz kann weiterhin Armlehnen umfassen. **In** Figur 19 ist ein Fahrzeugsitz mit lediglich einer Armlehne gezeigt. Die Rückenlehne 3 umfasst ein Rückenlehnenunterteil 4 und ein Rückenlehnenoberteil 5. **In** Figur 19 ist das Rückenlehnenoberteil 5 in der Grundstellung gezeigt.

An jeweils einem Schalenelement 7, 8 sind zumindest zwei Laufbahnen 9,10 angeordnet oder durch dieses ausgebildet sind, wobei die Gleiteinrichtung 6 die Laufbahnen 9, 10 kontaktiert und entlang diesen gleiten kann. Das Rückenlehnenoberteil 5 umfasst ein vorderes Schalenelement 7 und ein hinteres Schalenelement 8. Das vordere Schalenelement 7 umfasst einen oberen Abschnitt 7a und einen Abstützabschnitt 7b. Der Abstützabschnitt 7b schließt an den oberen Bereich an und schließt mit diesem einen Winkel β ein. Der Winkel β liegt vorzugsweise in einem Bereich zwischen 75° und 115° weiter bevorzugt zwischen 85 und 110°. Auf dem vorderen Schalenelement 7 zumindest ein Polsterelement 12 zumindest abschnittsweise angeordnet ist. Das zumindest eine Polsterelement 12 kann lediglich auf dem Abstützabschnitt 7b angeordnet sein oder sowohl den Abstützabschnitt 7b als auch den oberen Abschnitt 7a abdecken. Vorzugsweise umfasst das zumindest eine Polsterelement 12 zumindest eine Polsterlage und gegebenenfalls einen Bezug.

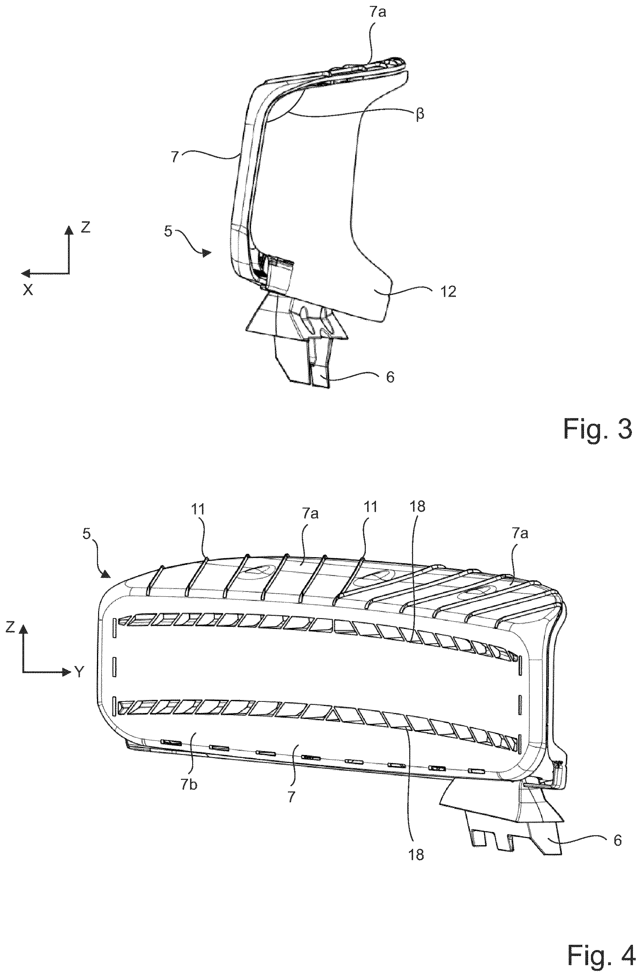

Ferner ist an dem hinteren Schalenelement 8 ein Blendenelement 12 angeordnet. Das Blendenelement 12 hat einen im Wesentlichen C-förmigen Querschnitt, wie beispielsweise in Figur 3 erkennbar ist.

Der oberen Abschnitt 7a des vordere Schalenelements 7 erstreckt sich entlang der Längsachse X nach hinten über die Gleiteinrichtung 6 das hintere Schalenelement 8 und das Blendenelement 12. Denkbar wäre, dass das hintere Schalenelement 8 und/oder das Blendenelement 12 an dem oberen Abschnitt befestigt sind. Denkbar wäre, dass das hintere Schalenelement 8 und/oder das Blendenelement 12 an dem oberen Abschnitt 7a ohne eine explizite Befestigung anliegt.

Das vordere Schalenelement 7 und das hintere Schalenelement 8 weisen jeweils einen oberen Randbereich 7c, 8a und ein unterer Randbereich 7d, 8b auf. Der obere Randbereich 7c, 8a des jeweiligen Schalenelements 7, 8 ist von dem unteren Randbereich 7d, 8b des jeweiligen Schalenelements 7, 8 entlang der Höhenachse Z beabstandet. Weiterhin weisen das vordere Schalenelement 7 und das hintere Schalenelement 8 jeweils einen rechten seitlichen Randbereich 7e, 8c und einen linken seitlichen Randbereich 7f, 8d auf. Der rechte seitliche Randbereich 7e, 8c des jeweiligen Schalenelements 7, 8 ist von dem linken seitlichen Randbereich 7f, 8d des jeweiligen Schalenelements 7, 8 im Wesentlichen entlang der Breitenachse Y beabstandet.

Das vordere Schalenelement 7 und das hintere Schalenelement 8 sind an deren oberen Randbereichen 7c, 8a sowie an deren rechten seitlichen Randbereichen 7e, 8c und deren linken seitlichen Randbereichen 7f, 8d fest verbunden. Hierzu können beispielsweise stoffschlüssige und oder formschlüssige Verbindungen verwendet werden. Somit kommen beispielsweise Schraubverbindungen oder Heißnietverbindungen in Betracht. Die unteren Randbereiche 7d, 8b der beiden Schalenelemente 7, 8 sind nicht verbunden. Diese beiden unteren Randbereiche 7d, 8b sind derart beabstandet, dass das Gleitelement 6 hier verlagerbar angeordnet ist. Zwischen den beiden Schalenelementen 7, 8 ist ein Zwischenraum 21 geschaffen, in welchem das Gleitelement 6 verlagerbar angeordnet ist. An den oberen Randbereichen 7c, 8a sowie an den seitlichen Randbereichen 7e, 7f, 8c, 8d können Verbindungseinrichtungen 27 vorgesehen sein. Dies können beispielsweise Bohrungen, Nuten, Gewinde etc. sein.

Die Gleiteinrichtung 6 ist in einem seitlichen Bereich des Rückenlehnenunterteils 4 angeordnet. In Figur 19 ist Begleiteinrichtung 6 auf der linken Seite, bei Blickrichtung des Insassen von vorne, angeordnet. Der Insasse kann durch eine Drehung nach rechts das Rückenlehnenoberteils 5 entsprechend verlagern. Dies kann beispielsweise mit dem Oberarm erfolgen.

Die seitliche Verlagerungsrichtung (V) liegt in einer Ebene, welche durch die Breitenachse Y und eine Längsachse X aufgespannt wird. Die seitliche Verlagerungsrichtung (V) kann sich geradlinig entlang der Breitenachse Y erstrecken oder entlang einer gekrümmten Richtung in der Ebene verlaufen. Ein solcher gekümmter Verlagerungsweg umfasst somit eine Komponente entlang der Breitenachse Y und eine Komponente entlang der Längsachse X. Vorliegend soll sich die seitliche Verlagerungsrichtung V im Wesentlichen entlang der Breitenachse Y erstrecken. Hiermit ist gemeint, dass die Komponente entlang der Längsachse X wesentlich kleiner als die Komponente entlang der Breitenachse Y ist. Ein solche gekrümmter Verlagerungsweg kann auch als eine Drehbewegung um die Höhenachse Z verstanden werden, wobei der Radius der Krümmung groß ist.

Die inneren Laufbahnen 9, 10 eine Krümmung auf, so dass das Rückenlehnenoberteil 5 entlang der gekrümmten Verlagerungskurve verlagerbar ist. Die Schalenelemente 7, 8 weisen ebenso eine Krümmung auf. Die Krümmung der Schalenelemente 7, 8 kann, muss aber nicht, der Krümmung der Laufbahnen entsprechen. Insbesondere die Krümmung des vorderen Schalenelement 7 ist hinsichtlich ergonomischer Gesichtspunkte ausgebildet. Durch die Krümmung der Laufbahnen 9, 10 bewegt sich das Rückenlehnenoberteil 5 entlang der gekrümmten Verlagerungskurve. Vorteilhafterweise ist die gekrümmte Verlagerungskurve kreisbogenförmig um die die Höhenachse Z. Hierdurch folgt das Rückenlehnenoberteil 5 der natürlichen Drehbewegung des Insassen und gibt dem Insassen auch in der verdrehten Sitzhaltung eine Absturzmöglichkeit.

Auf dem oberen Abschnitt 7a des vorderen Schalenelements 7 sind erste Verstärkungselemente 11 in Form von Rippenelemente angeordnet. Die Rippenelemente in zwei Bereichen angeordnet. Die zwei Bereiche sind durch eine Mittelachse 22, welche mittig durch den oberen Abschnitt 7a des vorderen Schalenelements 7 verläuft, getrennt. Innerhalb dieser Bereiche sind die jeweiligen Rippenelemente 11 im Wesentlichen parallel zueinander angeordnet. Die Rippenelemente 11 in dem ersten Bereich schließen mit einer Achse, welche parallel zu der Mittelachse M verläuft, einen Winkel α ein. Vorteilhafterweise liegt der Winkel α in einem Bereich zwischen 10° und 60°, bevorzugt in einem Bereich zwischen 20° und 45°. In dem zweiten Bereich schließen die jeweiligen Rippenelemente 11 mit einer Achse, welche parallel zu der Mittelachse 22 verläuft, einen Winkel -α ein. Die Rippenelemente 11 des zweiten Bereichs schließen somit vorteilhafterweise einen Winkel ein, welcher in einem Bereich zwischen -10° und -60°, bevorzugt in einem Bereich zwischen -20° und -45° liegt.

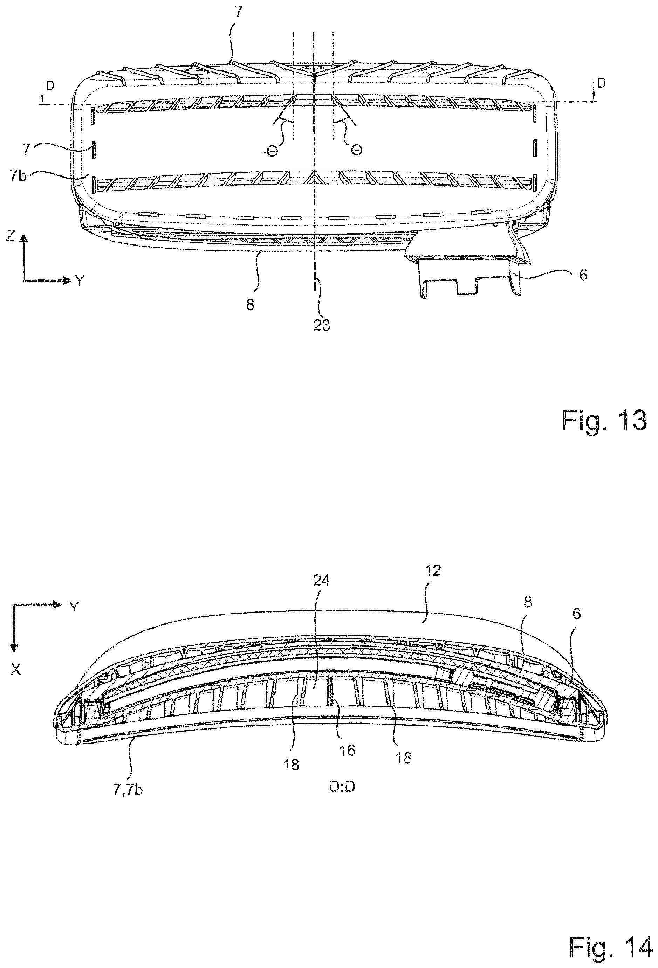

Die Schalenelemente 7, 8 können zweite Verstärkungselemente 18 aufweisen, welche in Abschnitten der Schalenelemente 7, 8 vorgesehen sind, in welchen die Laufbahnen 9, 10 angeordnet oder ausgebildet sind. Derartige Verstärkungselemente 18 können als Rippenelemente ausgebildet sein. In Figur 14 ist ein Schnitt entlang der Achse D:D der Figur 13 dargestellt. Hier sind die Verstärkungselemente 18 gut erkennbar. Zwischen den Verstärkungselementen 18 sind Freiräume vorhanden. Die Verstärkungselemente 18 sind ebenso in zwei Bereichen angeordnet. Die zwei Bereiche sind durch eine Mittelachse 23, welche mittig durch den Abstützabschnitt 78 des vorderen Schalenelements 7 verläuft, getrennt. In den jeweiligen Bereichen verlaufen die Rippenelemente 18 im Wesentlichen parallel zueinander. Die Rippenelemente 18 in dem ersten Bereich schließen mit einer Achse, welche parallel zu der Mittelachse 23 verläuft, einen Winkel θ ein. Vorteilhafterweise liegt der Winkel θ in einem Bereich zwischen 10° und 60°, bevorzugt in einem Bereich zwischen 20° und 45°. In dem zweiten Bereich schließen die jeweiligen Rippenelemente 18 mit einer Achse, welche parallel zu der Mittelachse 23 verläuft, einen Winkel - θ ein. Die Rippenelemente 18 des zweiten Bereichs schließen somit vorteilhafterweise einen Winkel ein, welcher in einem Bereich zwischen -10° und -60°, bevorzugt in einem Bereich zwischen -20° und -45° liegt.

Weiterhin ragen die Rippenelemente 18 entlang der Längsachse X nach hinten. Ein Querschnitt der Rippenelemente 18 nimmt entlang der Längsachse X nach hinten hin zu. An einem hinteren Ende der Rippenelemente 18 ist ein inneres Wandelement 24 vorgesehen, an welchem die vorderen Laufbahnen 9 angeordnet sind oder durch dieses ausgebildet sind.

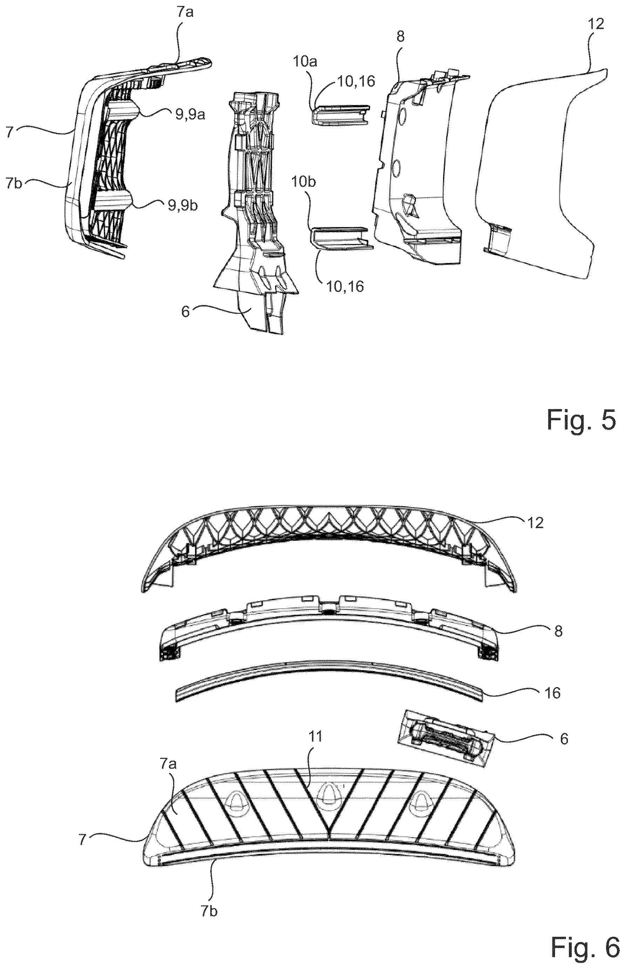

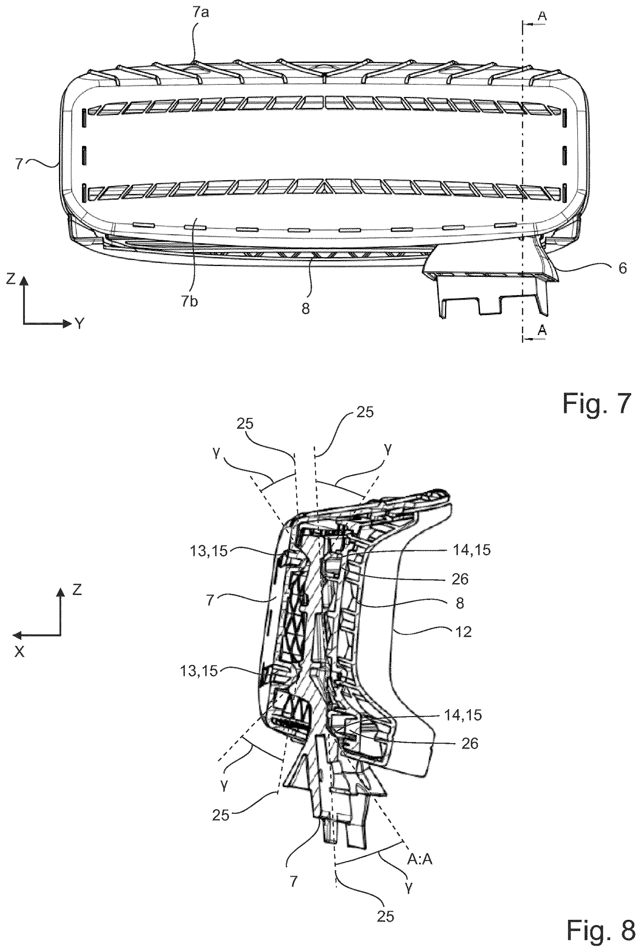

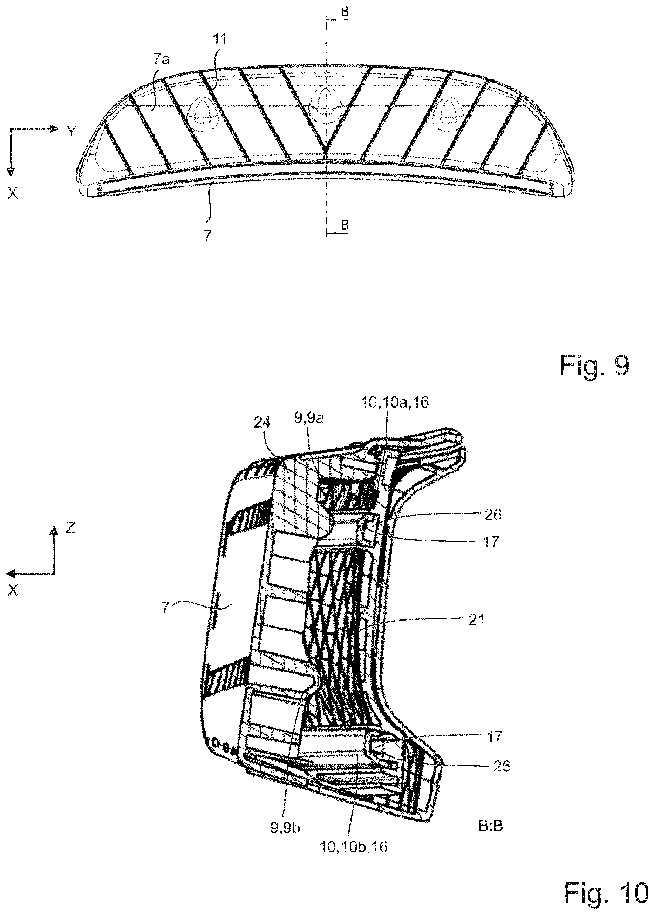

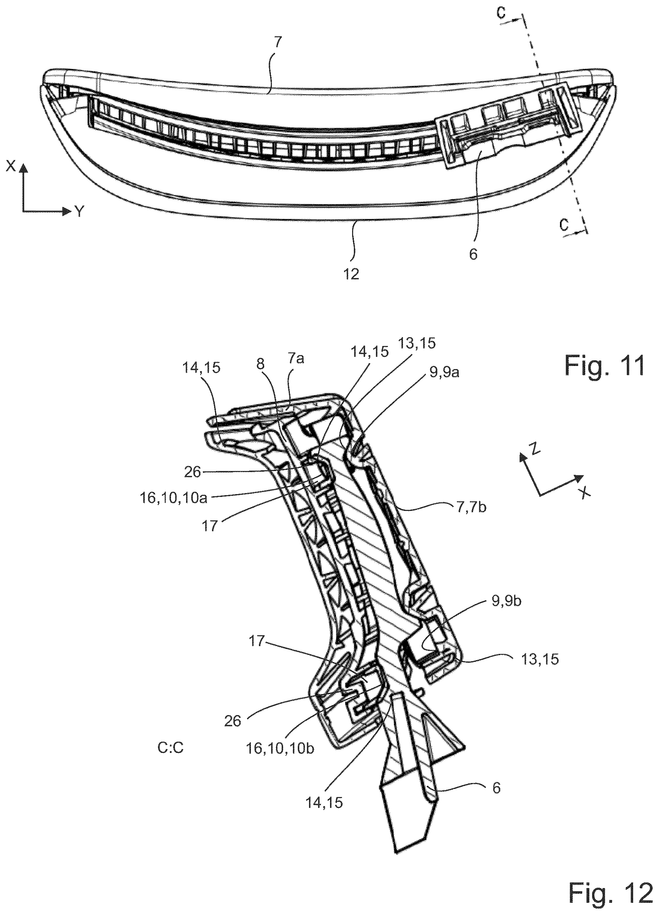

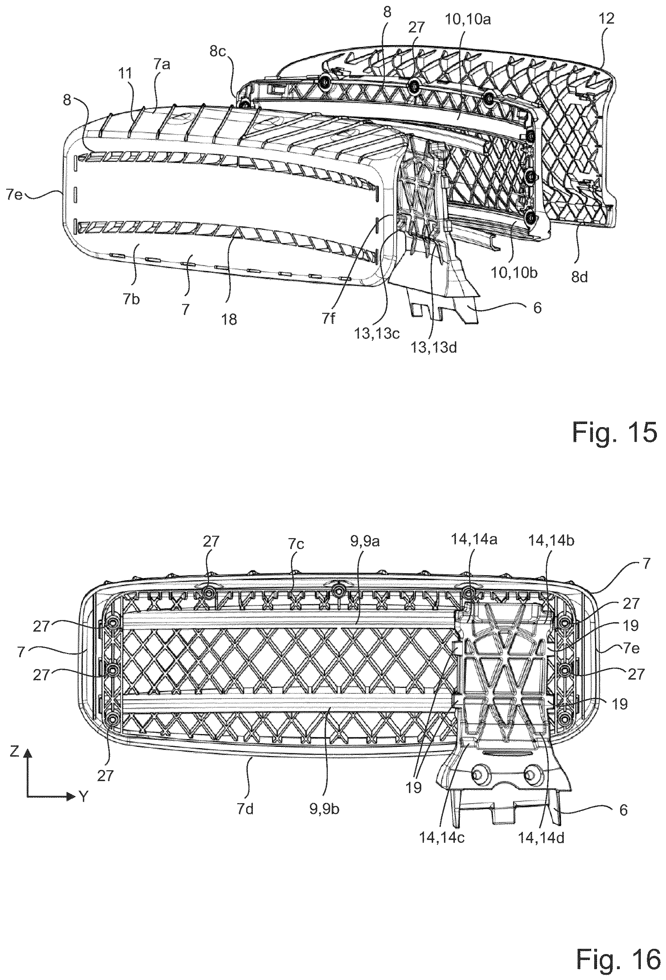

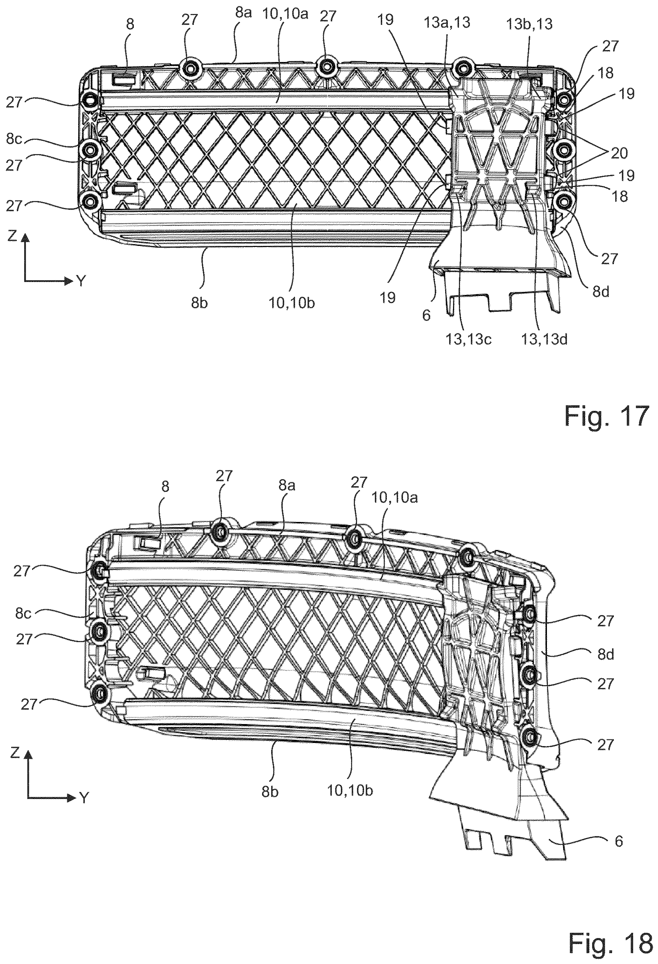

Wie in den Figuren 5, 8, 10, 12 und 15 bis 18 gut ersichtlich ist, umfasst die vorliegende Ausführungsform 4 Laufbahnen 9, 10. Es sind zwei vordere Laufbahnen 9 vorhanden, welche an dem vorderen Schalenelement 7 angeordnet sind, beziehungsweise in dessen inneren Wandelement 24 integriert sind. Die beiden vorderen Laufbahnen 9 sind entlang der Höhenachse Z voneinander beabstandet. Es sind weiterhin zwei hintere Laufbahnen 10 vorhanden, welche an dem hinteren Schalenelement 8 angeordnet sind. Auch die hinteren Laufbahnen sind entlang der Höhenachse Z voneinander beabstandet. Vorliegend sind auch die Laufbahnen 9,10 im Wesentlichen entlang der gesamten Breitenerstreckung der Schalenelemente7, 8 durchgehend ausgebildet.

Jedem der Laufbahnen 9, 10 ist zumindest ein Gleitelement 13, 14 der Gleiteinrichtung 6 zugeordnet ist. An der Gleiteinrichtung 6 sind vordere Gleitelement 13 vorgesehen, welche den vorderen Laufbahnen 9 des vorderen Schalenelements 7 zugeordnet sind. Weiterhin sind an der Gleiteinrichtung 6 hintere Gleitelement 14 vorgesehen, welche den hinteren Laufbahnen 10 des hinteren Schalenelements 8 zugeordnet sind. Weiterhin sind jeder der Laufbahnen 9, 10 zwei Gleitelemente 13, 14 zugeordnet. Somit umfasst die Gleiteinrichtung 6 vier vordere Gleitelemente 13 und vier hintere Gleitelemente 14. Die einer jeweiligen Laufbahn zugeordneten Gleitelemente 13, 14 sind entlang der Breitenachse Y beabstandet und jeweils an einem gegenüberliegenden seitlichen Randbereich der Gleiteinrichtung 6 angeordnet. Denkbar wäre jedoch auch, dass ein durchgehendes Gleitelement oder mehr als zwei Gleitelemente vorgesehen sind.

So sind vorliegend ein erstes vorderes Gleitelement 13a und ein zweites vorderes Gleitelement 13b der oberen vorderen Laufbahn 9, 9a zugeordnet. Ein drittes vorderes Gleitelement 13c und ein viertes vorderes Gleitelement 13d sind der unteren vorderen Laufbahn 9, 9b zugeordnet. Weiterhin sind ein erstes hinteres Gleitelement 14a und ein zweites hinteres Gleitelement 13b der oberen hinteren Laufbahn 10, 10a zugeordnet. Ein drittes hinteres Gleitelement 14c und ein viertes hinteres Gleitelement 14d sind der unteren hinteren Laufbahn 10, 10b zugeordnet.

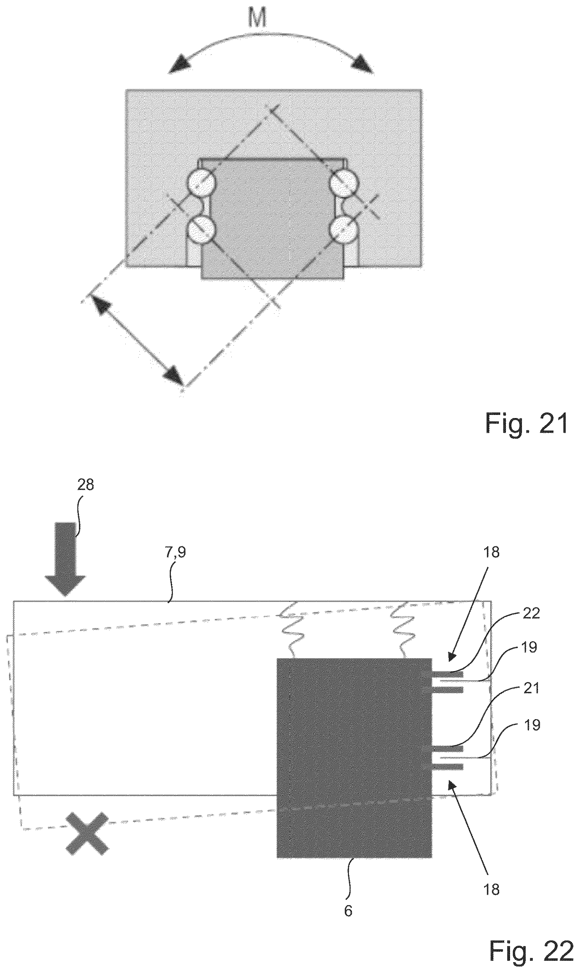

Die Laufbahnen 9, 10 und die zugeordneten Gleitelemente 13, 14 stellen eine angestellte Lagerung mit einer O- Anordnung dar. Die Gleiteinrichtung 6 und die diese umschließenden Schalenelemente 7, 8 mit den Laufbahnen 9, 10 stellen prinzipiell eine Profilschienenführung dar. Mit einer vorteilhaften angestellten Lagerung ist die Anordnung der Gleiteinrichtung 6 und der umschließenden Schalenelemente 7,8 mit einer Profilschienenführung, umfassend eine doppelseitige Schwalbenschwanzprofilschiene vergleichbar. Eine solche prinzipielle O- Anordnung ist in Figur 21 dargestellt. Eine solche O Anordnung stellt eine maximal mögliche Kippsteifigkeit bereit, da eine Vielzahl von Drehmomenten (beispielsweise das Drehmoment M in der Figur 21) durch die Anordnung blockiert werden.

Die Gleitelemente 13, 14 umfassen angestellte Kontaktflächen 15, welche die zugeordneten Laufbahnen 9, 10 kontaktieren. Die Gleitelemente 13a, 13b, 14a, 14b, welche den jeweils oberen Laufbahnen 9a, 10a zugeordnet sind, werden im Folgenden obere Gleitelemente genannt. Die oberen Gleitelemente 13a, 13b, 14a, 14b umfassen Kontaktflächen 15, welche entlang der Höhenachse Z schräg nach oben und nach außen verlaufen. Die Kontaktflächen 15 dieser oberen Gleitelemente 13a, 13b, 14a, 14b, schließen somit mit einer Achse 25, welche parallel zu der Mittelsenkrechten der Gleiteinrichtung 6 verläuft, einen Winkel γ ein. Der Winkel γ liegt in einem Bereich zwischen 30° und 50°. Die Gleitelemente 13c, 13d, 14c, 14d, welche den jeweils unteren Laufbahnen 9b, 10b zugeordnet sind, werden im Folgenden untere Gleitelemente genannt. Die unteren Gleitelemente 13c, 13d, 14c, 14d umfassen Kontaktflächen 15, welche entlang der Höhenachse Z schräg nach unten und nach außen verlaufen. Die Kontaktflächen 15 der unteren Gleitelemente 13c, 13d, 14c, 14d schließen somit mit einer Achse 25, welche parallel zu der Mittelsenkrechten der Gleiteinrichtung 6 verläuft, einen Winkel γ ein. Der Winkel γ liegt in einem Bereich zwischen 30° und 50. Der genannte Winkel γ kann für alle Kontaktflächen 15 der Gleitelemente 13, 14 gleich sein. Denkbar wäre auch, dass der Winkel γ lediglich bei den Gleitelementen 13, 14, welche einer bestimmten Laufbahn 9, 10 zugeordnet sind, gleich ist.

Zwischen den Gleitelementen 13, 14 und der entsprechenden Laufbahn 9. 10 besteht ein im Wesentlichen linienförmiger Kontakt. Vorzugsweise umfassen die Gleitelemente 13, 14 eine Kontaktfläche 15 auf, welche eine Wölbung aufweist. Insbesondere umfassen die Gleitelemente 13, 14 weisen eine Kontaktfläche 15 auf, welche eine tonnenförmige Wölbung aufweisen. Eine solche tonnenförmige Ausgestaltung der Kontaktfläche bedingt einen im Wesentlichen linienförmigen Kontakt, welche im Gegensatz zu einem punktförmigen Kontakt (beispielsweise bei kugelförmigen Kontaktflächen) eine minimale Flächenpressung bedingt. Weiterhin gewährleistet eine tonnenförmig ausgebildete Kontaktfläche eine maximale Verformungsindifferenz. Diese ist in Figur 20 prinzipiell dargestellt. Hier ist ersichtlich, dass bei einer seitlichen Krafteinwirkung das Kontaktbild sich nur unwesentlich im Gegensatz zu einer zentralen Krafteintrag ändert.

Die oberen vorderen Gleitelemente 13a, 13b sind im Wesentlichen auf einer gleiche Höhe entlang der Höhenachse Z wie die oberen hinteren Gleitelemente 14a, 14b angeordnet. Die unteren vorderen Gleitelemente 13c, 13d sind entlang der Höhenachse Z versetz über den unteren hinteren Gleitelementen14c, 14d angeordnet.

Eine erste Teilmenge der inneren Laufbahnen 9, 10 ist durch Leistenelemente 16 ausgebildet. Vorliegend sind die die hinteren Laufbahnen 10, 10a, 10b. Dies soll jedoch keine Beschränkung der Allgemeinheit darstellen. Die Leistenelemente 16 an dem hinteren Schalenelement 8 angeordnet. Das hintere Schalenelement 8 umfasst hierzu entsprechende Aufnahmen 26. Zwischen einem Leistenelement 16 und dem hinteren Schalenelement ist zumindest ein elastisches Element 17 angeordnet. Das zumindest eine elastisches Element 17 kann eine Wellen- oder Blattfeder, ein elastisches Polymer oder Ähnliches sein. Das zumindest eine elastisches Element 17 erstreckt sich bevorzug entlang der gesamten Breitenerstreckung der Laufbahnen 10, 10a, 10b. Das zumindest eine elastisches Element 17 stellt eine Vorspannung bereit, welche das jeweilige Leistenelement 16 an die Gleiteinrichtung 6 beziehungsweise an das zugeordnete Gleitelement drückt. Gleichzeitig wird auch die Gleiteinrichtung 6 gegen die vorderen Laufbahnen 9 gedrückt.

Jeweils eine Laufbahn 9 des vorderen Schalenelements 7 und eine Laufbahn 10, 16 des hinteren Schalenelements 8 bilden ein Laufbahnpaar. Dabei ist jeweils eine Laufbahn 10, 16 eines solchen Laufbahnpaares der ersten Teilmenge zugehörig. Vorliegend bilden die oberen Laufbahnen 9a, 10a ein erstes Laufbahnpaar. Dabei ist die hintere obere Laufbahn 10a als Leistenelement 16 ausgebildet, welches durch zumindest eine elastisches Element 17 an die Gleitelemente 14 gedrückt wird. Die unteren Laufbahnen 9b, 10b bilden ein zweites Laufbahnpaar. Dabei ist die hintere untere Laufbahn 10b als Leistenelement 16 ausgebildet, welches durch zumindest eine elastisches Element 17 an die Gleitelemente 14 gedrückt wird.

Einen ähnlichen Effekt, wie durch das Vorsehen der Leistenelemente 16 und der elastisches Elemente 17 kann dadurch erreicht werden, wenn die Schalenelemente 7, 9 unterschiedliche Steifigkeiten aufweisen, wobei die Steifigkeiten der Schalenelemente 7, 9 derart ausgebildet sind, dass die vorderen Laufbahnen 9 oder die hinteren Laufbahnen 10 gegen die Gleiteinrichtung 6 gedrückt werden.

In der Grundstellung des Rückenlehnenoberteils 5 und/oder einer zweiten Stellung des Rückenlehnenoberteils 5, in welcher das Rückenlehnenoberteil 5 um einen maximalen Verlagerungsweg verlagert ist, besteht zumindest eine lösbare mechanische Sicherungsverbindung 18 zwischen der Gleiteinrichtung 6 und zumindest einem der Schalenelemente 7, 8. Die Sicherungsverbindung 18 ist dazu bestimmt und geeignet Krafteinwirkungen entlang der Höhenachse Z aufzunehmen. Die zumindest eine Sicherungsverbindung ist durch eine Verlagerung des Rückenlehnenoberteils 5 aus der Grundstellung oder der zweiten Stellung heraus wieder lösbar.

Die Sicherungsverbindung 18 umfasst zumindest ein Vorsprungselement 19, welches zumindest in der Grundstellung oder zumindest der zweiten Stellung in zumindest einen Aufnahmeelement 20 angeordnet ist.

In Figur 22 ist die prinzipielle Wirkung einer solchen Sicherungsverbindung dargestellt. Befindet sich das Rückenlehnenoberteil 5 in der Grundstellung oder der zweiten Stellung, so wirkt bei einer Krafteinwirkung entlang des Pfeils 28 eine entsprechende Hebelwirkung, welche eine Kippbewegung der Schalenelemente 7, 9 relativ zu der Gleiteinrichtung 6 verursacht. Hierdurch können die Schalenelemente 7, 9 und/oder die Gleiteinrichtung 6 beeinträchtig oder beschädigt werden. Durch die Sicherungsverbindung 18 wird eine solche Verkippung verhindert und die entsprechende Krafteinwirkung durch die Sicherungseinrichtung 18 aufgenommen.

Das Vorsprungselement 19, kann an der Gleiteinrichtung 6 oder einem der Schalenelemente 7, 8 angeordnet sein. Komplanar dazu, ist das Aufnahmeelement 20 an einem der Schalenelemente 7, 8 oder an der Gleiteinrichtung 6 angeordnet. Das Aufnahmeelement 20 besteht zumindest aus einer oberen und einer unteren Wandeung, welche das Vorsprungselement 19 kontaktieren. Befindet sich das Vorsprungselement 19 in dem Aufnahmeelement 20 wird eine Kippbewegung der beiden Elemente 19, 20 relativ zueinander durch deren Kontakt verhindert.

Vorliegende Erfindung bietet einen neuartigen Ansatz für Gestaltung eines Systems zur Unterstützung des Fahrers bei Ausübung rückwärts- und seitwärtsgerichteren Tätigkeiten. Sie zielt im Wesentlichen auf deutliche Reduktion des notwendigen Bauraumes, Erweiterung von Designmöglichkeiten sowie signifikante Vereinfachung der Konstruktion und Reduktion der Herstellkosten im Verglich zum Stand der Technik.

Der Ansatz basiert auf neuem Gestaltungsprinzip der Linearführung des Systems im Wesentlichen entlang der Breitenachse Y. Es wird dabei eine Art Profilschienenführung bereitgestellt. Dabei wird die Profilschiene, bestehend vorderer und hinterer Hälfte mit jeweils zwei inneren Laufbahnen 9, 10, im beweglichen Bereich des Systems untergebracht. Die Gleiteinrichtung 6 mit vier äußeren Laufbahnen in Form der Gleitelemente 13, 14 wird innerhalb der Profilschiene platziert und am Rückenlehenunterteil 4 befestigt. Da die Laufflächen beider Gleitpartner als O-Anordnung ausgebildet sind, wird die Aufnahme von Kräften und Momenten in und um X- und Z-Achsen bei maximal möglichen Momenten- und Kippsteifigkeiten ermöglicht. Zum Ausgleich der Toleranzen und Kompensation des Spiels und Verschleißes zwischen den Gleitpartnern wird eine Vorspannung entweder durch die Unterschiede in Steifigkeiten zwischen der vorderen und hinteren Hälfte der Profilschiene oder durch Einbringung von elastisch gelagerten Laufflächen in Form der Leistenelement 16 in vorderer oder hinterer Hälfte der fiktiven Profilschiene (Fest-Loslager-Prinzip) erzeugt. Das neue System kann somit wesentlich flacher, spielfrei, toleranz- und verschleißindifferent gestaltet werden. Bei vollständiger Intergration der Profilschiene in die umgebenden Teile unter Verwendung von modernen Fertigungsverfahren wie z.B. Spritzgusstechnologie können Materialeffizienz gesteigert und Fertigungs- und Montageprozesse vereinfacht werden, was wiederum in Reduktion der Herstellungskosten sich widerspiegelt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeugsitz
- 2: Sitzteil
- 3: Rückenlehne
- 4: Rückenlehnenunterteil
- 5: Rückenlehnenoberteil
- 6: Gleiteinrichtung
- 7: vorderes Schalenelement
- 7a: oberer Abschnitt
- 7b: Abstützabschnitt
- 7c: oberer Randbereich des vorderen Schalenelements
- 7d: unterer Randbereich des vorderen Schalenelements
- 7e: rechter seitlicher Randbereich des vorderen Schalenelements
- 7f: linker seitlicher Randbereich des vorderen Schalenelements
- 8: hinteres Schalenelement
- 8a: oberer Randbereich des hinteren Schalenelements
- 8b: unterer Randbereich des hinteren Schalenelements
- 8c: rechter seitlicher Randbereich des hinteren Schalenelements
- 8d: linker seitlicher Randbereich des hinteren Schalenelements
- 9: vordere Laufbahnen
- 9a: obere vordere Laufbahn
- 9b: untere vordere Laufbahn
- 10: hintere Laufbahnen
- 10a: obere hintere Laufbahn
- 10a: untere hintere Laufbahn
- 11: erste Verstärkungselemente
- 12: Blendenelement
- 13: vordere Gleitelemente
- 13a: erstes vorderes Gleitelement
- 13b: zweites vorderes Gleitelement
- 13c: drittes vorderes Gleitelement
- 13d: viertes vorderes Gleitelement
- 14: hintere Gleitelemente
- 15: Kontaktfläche
- 16: Leistenelement
- 17: elastisches Element
- 18: Sicherungsverbindung
- 19: Vorsprungselement
- 20: Aufnahmeelement
- 21: Zwischenraum
- 22: Mittelachse des oberen Abschnitts
- 23: Mittelachse des Abstützabschnitts
- 24: inneres Wandelement des vorderen Schalenelements
- 25: Achse parallel zu der Mittelsenkrechten der Gleiteinrichtung
- 26: Aufnahmen
- 27: Verbindungseinrichtungen
- α: Winkel
- β: Winkel
- γ: Winkel
- θ: Winkel
- V: Verlagerungsrichtung
- X: Längsachse
- Y: Breitenachse
- Z: Höhenachse

## Patentansprüche

1. Fahrzeugsitz (1), insbesondere für ein Nutzkraftfahrzeug, umfassend ein Sitzteil (2) und eine Rückenlehne (3), welche ein Rückenlehnenunterteil (4) und ein Rückenlehnenoberteil (5) umfasst, wobei das Rückenlehnenoberteil (5) relativ zu dem Rückenlehnenunterteil (4) verlagerbar ist,
**dadurch gekennzeichnet, dass**
an dem Rückenlehnenunterteil (4) eine Gleiteinrichtung (6) feststehend angeordnet ist, wobei das Rückenlehnenoberteil (5) die Gleiteinrichtung (6) zumindest teilweise umschließt und an dieser entlang einer seitlichen Verlagerungsrichtung (V) verlagerbar angeordnet ist, wobei das Rückenlehnenoberteil (5) zwei fest miteinander verbundene Schalenelemente (7, 8) umfasst, zwischen welchen die Gleiteinrichtung (6) angeordnet ist, wobei zumindest zwei innere Laufbahnen (9, 10) an jeweils einem Schalenelement (7, 8) angeordnet oder durch das jeweilige Schalenelement (7,8) ausgebildet sind, wobei die Gleiteinrichtung (6) die inneren Laufbahnen (9, 10) kontaktiert und entlang diesen gleiten kann.

2. Fahrzeugsitz (1) nach Anspruch 1,
**dadurch gekennzeichnet, dass**
die seitliche Verlagerungsrichtung (V) in einer Ebene liegt, welche durch eine Breitenachse (Y) und eine Längsachse (X) aufgespannt wird.

3. Fahrzeugsitz (1) nach Anspruch 1 oder 2,
**dadurch gekennzeichnet, dass**
ein vorderes Schalenelement (7) und ein hinteres Schalenelement (8) vorgesehen sind, wobei das vordere Schalenelement (7) einen oberen Abschnitt (7a) umfasst, welcher sich entlang der Längsachse (X) nach hinten über die Gleiteinrichtung (6) erstreckt, wobei auf dem oberen Abschnitt (7a) Verstärkungselemente (11) angeordnet sind, wobei die Verstärkungselemente (11) als Rippenelemente ausgebildet sind.

4. Fahrzeugsitz (1) nach Anspruch 3,
**dadurch gekennzeichnet, dass**
zumindest ein Polsterelement (12) zumindest abschnittsweise auf dem vorderen Schalenelement (7) angeordnet ist, wobei an dem hinteren Schalenelement (8) ein Blendenelement (12) angeordnet ist.

5. Fahrzeugsitz (1) nach einem der vorhergehenden Ansprüche,
**dadurch gekennzeichnet, dass**
die Gleiteinrichtung (6) in einem seitlichen Bereich des Rückenlehnenunterteils (4) angeordnet ist, wobei die inneren Laufbahnen (9, 10) eine Krümmung aufweisen, so dass das Rückenlehnenoberteil (5) entlang einer gekrümmten Verlagerungskurve verlagerbar ist.

6. Fahrzeugsitz (1) nach einem der vorhergehenden Ansprüche,
**dadurch gekennzeichnet, dass**
jeder der Laufbahnen (9, 10) zumindest ein Gleitelement (13, 14) der Gleiteinrichtung (6) zugeordnet ist, wobei die Laufbahnen (9, 10) und die zugeordneten Gleitelemente (13, 14) eine angestellte Lagerung darstellen, wobei die Laufbahnen(9, 10) und die zugeordneten Gleitelemente (13, 14) eine O-Anordnung darstellen.

7. Fahrzeugsitz (1) nach Anspruch 6,
**dadurch gekennzeichnet, dass**
zwischen dem zumindest einen Gleitelement (13, 14) und der Laufbahn (9, 10) ein im Wesentlichen linienförmiger Kontakt besteht, wobei das zumindest eine Gleitelement (13, 14) eine Kontaktfläche (15) aufweist, welche eine zugeordnete Laufbahn (9, 10) kontaktiert, wobei die Kontaktfläche (15) tonnenförmig ausgebildet ist.

8. Fahrzeugsitz (1) nach einem der vorhergehenden Ansprüche,
**dadurch gekennzeichnet, dass**
eine erste Teilmenge der inneren Laufbahnen (9, 10) durch Leistenelemente (16) ausgebildet ist, wobei die Leistenelemente (16) an einem der Schalenelemente (7, 8) angeordnet sind, wobei zwischen einem Leistenelement (16) und einem Schalenelement (7, 8) zumindest ein elastisches Element (17) angeordnet ist, welches dazu bestimmt ausgebildet ist das jeweilige Leistenelement (16) an die Gleiteinrichtung (6) zu drücken.

9. Fahrzeugsitz (1) nach Anspruch 8,
**dadurch gekennzeichnet, dass**
jeweils eine Laufbahn (9) des vorderen Schalenelements (7) und eine Laufbahn (10, 16) des hinteren Schalenelements (8) ein Laufbahnpaar bilden, wobei jeweils eine Laufbahn (10, 16) eines solchen Laufbahnpaares der ersten Teilmenge zugehörig ist.

10. Fahrzeugsitz (1) nach einem der vorhergehenden Ansprüche,
**dadurch gekennzeichnet, dass**
die Schalenelemente (7, 9) unterschiedliche Steifigkeiten aufweisen, wobei die Steifigkeiten der Schalenelemente (7, 9) derart ausgebildet sind, dass die vorderen Laufbahnen (9) oder die hinteren Laufbahnen (10) gegen die Gleiteinrichtung (6) gedrückt werden.

11. Fahrzeugsitz (1) nach einem der vorhergehenden Ansprüche,
**dadurch gekennzeichnet, dass**
die Schalenelemente (7, 8) zweite Verstärkungselemente (18) aufweisen, welche zumindest in Abschnitten der Schalenelemente (7, 8) vorgesehen sind, in welchen die Laufbahnen (9, 10) angeordnet oder ausgebildet sind.

12. Fahrzeugsitz (1) nach einem der vorhergehenden Ansprüche,
**dadurch gekennzeichnet, dass**
in einer Grundstellung des Rückenlehnenoberteils (5) und/oder einer zweiten Stellung des Rückenlehnenoberteils (5), in welcher das Rückenlehnenoberteil (5) um einen maximalen Verlagerungsweg verlagert ist, zumindest eine lösbare mechanische Sicherungsverbindung (18) zwischen der Gleiteinrichtung (6) und zumindest einem der Schalenelemente (7, 8) besteht, wobei die zumindest eine Sicherungsverbindung (18) dazu bestimmt und geeignet Krafteinwirkungen entlang der Höhenachse (Z) aufzunehmen, wobei die Sicherungsverbindung (18) zumindest ein Vorsprungselement (19) umfasst, welches zumindest in der Grundstellung oder zumindest der zweiten Stellung in zumindest einen Aufnahmeelement (20) angeordnet ist.

13. Nutzkraftfahrzeug mit einem Fahrzeugsitz nach den vorhergehenden Ansprüchen.
